(19) Europäisches Patentamt
European Patent Office
Office européen des brevets

(11) **EP 2 736 003 A1**

(12) **EUROPÄISCHE PATENTANMELDUNG**

(43) Veröffentlichungstag:
**28.05.2014 Patentblatt 2014/22**

(51) Int Cl.:
***G06Q 10/06*** *(2012.01)*

(21) Anmeldenummer: **12194235.3**

(22) Anmeldetag: **26.11.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Kunze, Ulrich**
**91088 Bubenreuth (DE)**
• **Raab, Stefan**
**91052 Erlangen (DE)**

(54) **Verfahren zur Bestimmung eines geeigneten Betriebszeitbereichs für Wartungsarbeiten an einer technischen Anlage**

(57) Verfahren zur Bestimmung eines geeigneten Betriebszeitbereichs für Wartungsarbeiten an einer technischen Anlage

Die Erfindung betrifft Verfahren zur Bestimmung eines Betriebszeitbereichs im Sinne eines ersten Zeitfensters ($\Delta Z1$) zur kosteneffizienten Ausführung von Wartungsarbeiten an einer technischen Anlage (1), insbesondere einer Kraftwerksanlage, welches folgende Schritte umfasst:
- Vorgeben von Werten (WW) eines zeitlichen Verlaufs (VKW) zu den Kosten (KW) der Wartungsarbeiten (KW);
- Vorgeben von Werten (WI) eines zeitlichen Verlaufs (VVK) zu den Verschlechterungskosten (VK);
- Vorgabe einer ersten Toleranzgrenze (T1);

- Ermittlung eines Minimums (M) der zeitlichen Funktion der Summe (S) von zeitlichem Verlauf (VKW) zu den Kosten der Wartungsarbeiten (KW) und zeitlichem Verlauf (VVK) zu den Verschlechterungskosten (VK);
- Ermittlung zweier Zeitwerte (Z1, Z2) zur Definition eines ersten Zeitfensters ($\Delta Z1$), wobei die zwei Zeitwerte (Z1, Z2) aus der zeitlichen Funktion der Summe (S) von zeitlichem Verlauf (VKW) zu den Kosten der Wartungsarbeiten (KW) und zeitlichem Verlauf (VVK) zu den Verschlechterungskosten (VK) berechnet werden und jeweils den Funktionswerten (F1, F2) zugeordnet sind, deren Werte dem Wert des Minimums (M) multipliziert mit (1+erste Toleranzgrenze (T1)) entsprechen.

EP 2 736 003 A1

**Beschreibung**

Die Erfindung betrifft ein Verfahren zur Bestimmung eines geeigneten Betriebszeitbereiches zur kosteneffizienten Ausführung von Wartungsarbeiten an einer technischen Anlage, insbesondere einer Kraftwerksanlage sowie eine Berechnungseinheit zur Bestimmung eines solchen Betriebszeitbereichs.

Die Bauteile von technischen Anlagen, insbesondere von großtechnischen Anlagen bzw. Kraftwerksanlagen unterliegen aufgrund eines kontinuierlichen Betriebs einem zunehmenden Verschleiß bzw. einer Minderung der Betriebsleistung und/oder Betriebsbereitschaft aufgrund von Ablagerungen oder auch Verschmutzungen. Um solchen negativen Einflüssen zu begegnen, werden bei technischen Anlagen regelmäßig Wartungsarbeiten durchgeführt, deren Ziel es ist, den Zustand der technischen Anlage wieder in einen geeigneten Betriebszustand zu versetzen bzw. die Anlage teilweise oder auch vollständig wieder herzustellen, damit diese über wenigstens ein Wartungsintervall ausfallfrei betrieben werden kann. Zudem werden durch die Wartungsarbeiten die durch Verschleiß und/oder Verschmutzung verursachten Leistungseinbußen verringert oder sogar ganz behoben.

Die erforderlichen Wartungsarbeiten können nach unterschiedlichen Voraussetzungen und zeitlichen Erfordernissen vorgenommen werden. Bei großtechnischen Anlagen ist häufig eine periodische Wartung wünschenswert, bei welcher die Wartungsintervalle in vorgegebenen Zeitabständen oder nach einer vorbestimmen Anzahl an Betriebsstunden bzw. Lastwechseln vorgegeben werden. Andere alternative Wartungsstrategien berücksichtigen ausschließlich den Grad des Verschleißes der Anlage bzw. definierter Ermüdungsanzeichen, die eine Verschlechterung des Anlagenzustands anzeigen. Diese Wartungsstrategie geht jedoch ein erhöhtes Risiko dahingehend ein, dass Anlagendefekte nicht ausreichend schnell erkannt werden können, so dass noch vor Ausführen der Wartungsarbeiten es zu einem Ausfall der Anlage bzw. davon umfasster Anlagenbauteile kommen kann.

Welche Wartungsstrategie für eine technische Anlage verfolgt werden sollte, unterliegt im Normalfall kostentechnischer, also wirtschaftlicher Entscheidungen. Insbesondere sind in einer dafür auszuführenden Kostenanalyse zu berücksichtigen die Kosten für die auszuführenden Wartungsarbeiten, wie auch die betriebsbedingten Verschlechterungskosten. Die Verschlechterungskosten unterscheiden sich von den Kosten der Wartungsarbeiten vor allem dadurch, dass sie die Umsatzeinbußen betreffen, die sich aufgrund von Verschleiß und/oder Verschmutzung im Laufe des Betriebs der technischen Anlage einstellen. Die dadurch hervor gerufenen Leistungseinbußen lassen sich bei Betrieb der technischen Anlage in entsprechenden Umsatzeinbußen ausdrücken, die wiederum als Verschlechterungskosten verrechnungstechnisch berücksichtigt werden können. Die Verschlechterungskosten sind damit typischerweise zeitabhängig, da mit zunehmendem Betrieb der technischen Anlage der Grad der Verschmutzung und der Grad des Verschleißes zunimmt, also damit auch die Leistungs- und Umsatzeinbußen. Im Falle einer kontinuierlich arbeitenden Pumpe bzw. eines Kompressors in einer technischen Anlage kommt es bspw. dazu, dass durch zunehmenden Verschleiß der Kolbendichtungen die Pumpleistung der Pumpe bzw. durch ein Zusetzen von Luftansaugbereichen mit Verschmutzungspartikeln die Kompressionsleistung des Kompressors über die Zeit absinkt. Dies drückt sich wiederum durch eine verminderte Arbeitsleistung und damit in einer verminderten Kosteneffizienz aus. Damit erhöhen sich also die vom Betreiber aufzuwendenden Kosten, d.h. die Verschlechterungskosten steigen.

Die Kosten für die Wartungsarbeiten sind hierbei im Gegensatz weitgehend zeitunabhängig bzw. unterliegen einer nur geringeren zeitlichen Abhängigkeit. Die Kosten für die Wartungsarbeiten betreffen nämlich im Wesentlichen die Personalkosten des Wartungspersonals, wobei diese natürlich je nach auszuführenden Wartungsarbeiten verhältnismäßig leichten Schwankungen unterworfen sein können. Zudem können sie die Ersatzteilkosten und Reinigungskosten betreffen, um den Verschleiß bzw. die Verschmutzung wieder zu beheben.

Hierbei sei an dieser Stelle auch darauf hingewiesen, dass die Wartungsarbeiten naturgemäß auch die Instandsetzungsarbeiten mit umfassen. Soweit nicht gegenteilig erwähnt, sei von diesem gegenseitigen Verhältnis von Wartungsarbeiten und Instandsetzungsarbeiten auszugehen.

Hinsichtlich der für die Wartung erforderlichen Kosten ist es für den Anlagenbetreiber vorteilhaft, die Wartungsintervalle derart zu gestalten, dass ein kosteneffizienter Betrieb der Anlage möglich ist. Werden die Wartungsintervalle in zu großen Abständen zueinander vorgenommen, können mitunter die Verschlechterungskosten die Ersparnisse aufgrund der über einen gewissen Zeitbereich verhältnismäßig geringeren Wartungskosten relativieren bzw. wieder zunichte machen. Werden die Wartungsintervalle jedoch zu klein bemessen, ergeben sich für den Anlagenbetreiber aufgrund der über einen vorgegebenen Zeitabschnitt verhältnismäßig zahlreichen Wartungsarbeiten erhöhte Betriebskosten, die es ebenfalls zu vermeiden gilt. Wünschenswert ist insofern eine wirtschaftlich geeignete Bestimmung der Wartungsintervalle, damit ein kosteneffizienter Betrieb ermöglicht werden kann.

Zu berücksichtigen gilt es hierbei auch, dass Wartungsarbeiten nicht zu beliebigen Zeitpunkten ausgeführt werden können. Der Zeitpunkt der vorgenommenen Wartungsarbeiten hängt mitunter von anlagentechnischen bzw. prozesstechnischen Gegebenheiten ab, wie auch der Verfügbarkeit des Wartungspersonals. Darüber hinaus ist zu berücksichtigen, dass die Wartungsarbeiten mitunter selbst über einen längeren Zeitraum durchgeführt werden müssen. Wartungsarbeiten können also nicht im Sinne eines genauen Zeitpunkts durchgeführt werden, sondern müssen vielmehr über ein vorbestimmtes Zeitintervall ausgeführt werden. Weiterhin ist zu berücksichtigen, dass jede vorhersagende Einschätzung hinsichtlich dieser und möglicherweise auch noch anderer relevanter Faktoren lediglich Vorgabewerte sind die einer zeitlichen Toleranz unterliegen.

Gemäß dieser hinsichtlich der Bestimmung der Länge der vorzusehenden Wartungsintervalle ist es also wünschenswert, eine flexible und jedoch auch gleichzeitig wirtschaftlich sinnvolle Entscheidungsgrundlage dem Anlagenbetreiber zu bieten. Insbesondere ist es Aufgabe der vorliegenden Erfindung, einen vorteilhaften Zeitbereich für die Ausführung von Wartungsarbeiten an einer technischen Anlage vorzugeben, welcher eine wirtschaftliche Ausführung der Wartungsarbeiten als auch gleichzeitig einen technisch, flexiblen Betrieb der technischen Anlage ermöglicht.

Diese der Erfindung zugrunde liegende Aufgabe wird durch ein Verfahren zur Bestimmung eines Betriebszeitbereichs im Sinne eines ersten Zeitfensters zur kosteneffizienten und damit wirtschaftlichen Ausführung von Wartungsarbeiten an einer technischen Anlage gemäß Anspruch 1 sowie durch eine Berechnungseinheit zur Bestimmung eines solchen Betriebszeitbereiches gemäß Anspruch 10 gelöst.

Insbesondere wird die Erfindungsaufgabe durch ein Verfahren zur Bestimmung eines Betriebszeitbereichs im Sinne eines ersten Zeitfensters zur kosteneffizienten Ausführung von Wartungsarbeiten an einer technischen Anlage, insbesondere einer Kraftwerksanlage, bzw. davon umfasster Bauteile gelöst, welches folgende Schritte umfasst:

- Vorgeben von Werten eines zeitlichen Verlaufs zu den Kosten der Wartungsarbeiten;
- Vorgeben von Werten eines zeitlichen Verlaufs zu den Verschlechterungskosten;
- Vorgabe einer ersten Toleranzgrenze;
- Ermittlung eines Minimums der zeitlichen Funktion der Summe von zeitlichem Verlauf zu den Kosten der Wartungsarbeiten und zeitlichem Verlauf zu den Verschlechterungskosten;
- Ermittlung zweier Zeitwerte zur Definition eines ersten Zeitfensters, wobei die zwei Zeitwerte aus der zeitlichen Funktion der Summe von zeitlichem Verlauf zu den Kosten der Wartungsarbeiten und zeitlichem Verlauf zu den Verschlechterungskosten berechnet werden und jeweils den Funktionswerten zugeordnet sind, deren Werte dem Wert des Minimums multipliziert mit (1+erste Toleranzgrenze) entsprechen.

Zudem wird die Erfindungsaufgabe durch eine Berechnungseinheit zur Bestimmung eines Betriebszeitbereichs im Sinne eines ersten Zeitfensters zur kosteneffizienten Ausführung von Wartungsarbeiten an einer technischen Anlage, insbesondere einer Kraftwerksanlage, bzw. davon umfasster Bauteile gelöst, gemäß einem der vorab oder nachfolgend beschriebenen Verfahren.

Hierbei ist darauf hinzuweisen, dass der erfindungsgemäße zeitliche Verlauf zu den Kosten der Wartungsarbeiten im Normalfall nicht identisch ist mit einem zeitlichen Verlauf der Kosten der Wartungsarbeiten. Ebenso ist der zeitliche Verlauf zu den Verschlechterungskosten nicht identisch mit einem zeitlichen Verlauf der Verschlechterungskosten selbst. Vielmehr stehen die jeweiligen Kostenverläufe in einer funktionellen Abhängigkeit von den entsprechenden Grundgrößen (Kosten der Wartungsarbeiten und Verschlechterungskosten), die selbst einen eigenständigen zeitlichen Verlauf aufweisen können.

Die grundlegende Idee der vorliegenden Erfindung zielt auf die Bestimmung eines geeigneten ersten Zeitfensters ab, innerhalb dessen die Wartungsarbeiten sowie die damit einhergehenden Instandsetzungsarbeiten über einen geeigneten Zeitbereich anstelle eines vorgegebenen Zeitpunktes ausgeführt werden können. Der Zeitbereich bestimmt sich aufgrund eines optimierten Zeitfensters, welches wiederum durch die Vorgabe einer ersten Toleranzgrenze bestimmt ist.

Typischerweise wird der zeitliche Verlauf zu den Kosten der Wartungsarbeiten eine andere zeitliche Abhängigkeit aufweisen, als der zeitliche Verlauf zu den Verschlechterungskosten. Wie bereits oben angedeutet, wird der zeitliche Verlauf zu den Kosten Verschlechterungskosten typischerweise über einen vorbestimmten Zeitbereich mit zunehmendem Betrieb der technischen Anlage ansteigen. Hierbei ist bspw. ein hinsichtlich der Zeit linearer Verlauf möglich. Gleichzeitig werden die Wartungskosten pro Zeitintervall fallen, soweit die Wartungsarbeiten über zunehmend größer beabstandete Wartungszeitintervalle ausgeführt werden. Die Verschlechterungskosten pro Zeitintervall werden jedoch mit zunehmender Größe der Wartungsintervalle einen ansteigenden Verlauf aufweisen.

Der Verlauf zu beiden Kosteneinflüssen bestimmt theoretisch einen optimalen Zeitpunkt für die Ausführung der Wartungsarbeiten und der damit verbundenen Instandsetzungsarbeiten. Dieser optimale Zeitpunkt entspricht dem zugehörigen Zeitwert eines Minimums der zeitlichen Funktion der Summe von zeitlichem Verlauf zu den Kosten der Wartungsarbeiten und zeitlichem Verlauf zu den Verschlechterungskosten. Zeitlich vor Erreichen dieses Minimums wird die Funktion der Summe einen fallenden Verlauf aufweisen, wobei zeitlich nach Erreichen des Minimums die Funktion der Summe einen ansteigenden Verlauf aufweisen wird. Insofern ist es auch möglich, vor und nach Erreichen des Minimums Funktionswerte zu bestimmen, deren Wert eine betragsgemäß vorbestimmte Abweichung von dem Minimalwert aufweist. Somit können die Funktionswerte ein Zeitfenster aufzeigen, innerhalb welchem die Wartungsarbeiten und die damit in Verbindung stehenden Instandsetzungsarbeiten mit einer vorgegebenen, wirtschaftlich vorteilhaften Kostentoleranz ausgeführt werden können. Diese Kostentoleranz bestimmt sich gemäß der vorgegebenen ersten Toleranzgrenze.

Die Bestimmung dieses vorteilhaften Betriebszeitbereichs im Sinne eines ersten Zeitfensters ermöglicht also die Ausführung von Wartungsarbeiten mit akzeptierten und vorhersagbaren Gesamtkosten. Der Verlauf zu den Gesamtkosten ergibt sich hierbei aus der Summe von zeitlichem Verlauf zu den Kosten der Wartungsarbeiten und zeitlichem Verlauf zu den Verschlechterungskosten. Das Zeitfenster ermöglicht zudem die Aufbereitung von kostenrelevanten Informationen in einfacher Form, so dass diese bei Integration in die Anlagenleittechnik den Benutzer mit wartungsspezifischen Informationen versorgen kann. Diese Informationen können bspw. für eine kontinuierliche Bereitstellung der Informationen zum nächsten optimalen bzw. vorteilhaften Zeitfenster für die Durchführung von Wartungsarbeiten genutzt werden. Der Benutzer kann folglich eine kostentechnisch relevante Entscheidung für den vorteilhaften Betrieb seiner technischen Anlage treffen. Insbesondere bei Berücksichtigung von aktuellen Betriebsparametern zur Beschreibung des Anlagenverschleißes bzw. der Anlagenverschmutzung, kann dem Betreiber der Anlage ein wichtiges Entscheidungsinstrument in die Hand gegeben werden.

Gemäß einer ersten Ausführungsform des erfindungsgemäßen Verfahrens ist vorgesehen, dass die Werte des zeitlichen Verlaufs zu den Kosten der Wartungsarbeiten Werte eines zeitlichen Verlaufs der spezifischen Kosten der Wartungsarbeiten entsprechen. Die spezifischen Kosten der Wartungsarbeiten unterscheiden sich von den Kosten der Wartungsarbeiten lediglich durch eine Gewichtung mittels betriebstechnischer Grundgrößen, insbesondere der Zeit, welche einem Wartungsintervall entspricht. Andere Grundgrößen können jedoch auch zur Gewichtung heran gezogen werden. Solche sind etwa die Anzahl der Tage, die Betriebsstunden, die Laststunden, die abgegebene und/oder aufgenommene Leistung, usw.. Die spezifischen Kosten sind somit mathematisch als Kosten pro Grundgröße, insbesondere pro Zeit zu verstehen. Geht man von im Wesentlichen konstanten Kosten für die Wartungsarbeiten innerhalb eines oder mehrerer Wartungsintervalle aus, so nehmen die spezifischen Kosten dieser Wartungsarbeiten invers mit dem zunehmenden zeitlichen Fortschritt ab. Mathematisch kann dies im Wesentlichen durch eine hyperbolische Funktion ausgedrückt werden. Gemäß einer weiteren bevorzugten Ausführungsform des erfindungsgemäßen Verfahrens ist vorgesehen, dass die Werte des zeitlichen Verlaufs zu den Kosten der Wartungsarbeiten Werten eines zeitlichen Verlaufs der Kosten der Wartungsarbeiten pro Zeitpunkt der Ausführung der Artungsarbeiten entsprechen. Können die Kosten der Wartungsarbeiten über den zeitlichen Verlauf relativ sicher vorhergesagt werden, etwa weil sie im Wesentlichen konstant sind, ergibt sich der zeitliche Verlauf zu den Kosten der Wartungsarbeiten aus einer einfachen Funktion der Zeit, nämlich einer hyperbolischen Abhängigkeit (Kosten der Wartungsarbeiten/Zeit). Der zeitliche Verlauf zu den Kosten der Wartungsarbeiten lässt sich somit analytisch leicht ausdrücken und erlaubt auch aus Sicht von verhältnismäßig langen Wartungsintervallen eine gute Vorhersagbarkeit.

Gemäß einer weiteren vorteilhaften Ausführungsform der Erfindung ist vorgesehen, dass die Werte des zeitlichen Verlaufs zu den Verschlechterungskosten Werten eines zeitlichen Verlaufs der spezifischen Verschlechterungskosten entsprechen. Die spezifischen Verschlechterungskosten entsprechen hierbei wiederum den Verschlechterungskosten gewichtet mit betriebstechnischen Grundgrößen, insbesondere der Zeit, also den Längen der Wartungsintervalle. Anders ausgedrückt sind die spezifischen Verschlechterungskosten die Verschlechterungskosten pro Länge der Wartungsintervalle. Andere Grundgrößen können jedoch auch zur Gewichtung heran gezogen werden. Solche sind etwa die Anzahl der Tage, die Betriebsstunden, die Laststunden, die abgegebene und/oder aufgenommene Leistung, usw..

Gemäß einer weiteren Ausführungsform des erfindungsgemäßen Verfahrens ist vorgesehen, dass die Werte des zeitlichen Verlaufs zu den Verschlechterungskosten Werten eines zeitlichen Verlaufs der Verschlechterungskosten pro Zeitpunkt der Ausführung der Wartungsarbeiten (Länge der Wartungsintervalle) entsprechen. Wird bspw. angenommen, dass die Verschlechterungskosten eine zeitlich linear ansteigende Funktion sind, so kann der zeitlich integrierte Verlauf zu den Verschlechterungskosten ebenfalls einen linearen Verlauf aufweisen, wie weiter unten noch im Detail ausgeführt werden wird.

Gemäß einer weiteren Ausführungsform der Erfindung ist vorgesehen, dass die erste Toleranzgrenze nicht mehr als 50%, bevorzugt nicht mehr als 10% und ganz besonders bevorzugt nicht mehr als 5% beträgt. Damit kann bei Ausführen der Wartungsarbeiten und der damit verbundenen Instandsetzungsarbeiten in dem ausführungsgemäß bestimmten ersten Zeitfenster ein geeigneter Kostenrahmen für die Kosten der Wartungsarbeiten bei entsprechender Berücksichtigung der Verschlechterungskosten erreicht werden. Je nach zeitlicher Unsicherheit, bzw. Genauigkeit der für die Berechnung vergebenen Werte kann der Betreiber der technischen Anlage so eine kosteneffiziente und damit wirtschaftliche Durchführung der Wartungsarbeiten erreichen.

Entsprechend einer besonders bevorzugten Ausführungsform der Erfindung ist vorgesehen, dass das Verfahren folgende weitere Schritte aufweist. Dies sind:

- Vorgabe einer zweiten Toleranzgrenze;
- Ermittlung zweier weiterer Zeitwerte zur Definition eines zweiten Zeitfensters, wobei die zwei Zeitwerte aus den zeitlichen Funktionen der Summe von zeitlichem Verlauf zu den Kosten der Wartungsarbeiten und zeitlichem Verlauf zu den Verschlechterungskosten berechnet werden und jeweils den Funktionswerten zugeordnet sind, deren Werte dem Wert des Minimums multipliziert mit (1+zweite Toleranzgrenze) entsprechen.

4

Insbesondere dann, wenn die zweite Toleranzgrenze ungleich bzw. größer als die erste Toleranzgrenze gewählt wird, ist das zweite Zeitfenster entsprechend ungleich bzw. größer als das ermittelte erste Zeitfenster. Der betragsmäßige Abstand von zeitlichem Beginn des zweiten Zeitfensters zu zeitlichem Beginn des ersten Zeitfensters kann dem Betreiber der technischen Anlage als zusätzliche technische Information und Hinweis zur bevorstehenden Durchführung der Wartungsarbeit herangezogen werden. Ebenso ist es möglich, die betragsmäßig zeitlichen Abstände zwischen dem Ende des ersten Zeitfensters und dem Ende des zweiten Zeitfensters dem Betreiber der Anlage wiederum als Information zur Handlungsgrundlage für die Durchführung von Wartungsarbeiten vorzugeben.

Gemäß einer ersten Weiterführung dieser Ausführungsform ist vorgesehen, dass das Verfahren weiterhin den Schritt des Berechnens des Betrags der Zeitdifferenz zwischen dem ersten Zeitwert des ersten Zeitfensters und dem ersten Zeitwert des zweiten Zeitfensters als Vorbereitungszeitintervall umfasst. Das Vorbereitungszeitintervall kann dazu dienen, den Betreiber der technischen Anlage auf die anstehenden Wartungsarbeiten hinzuweisen. Zudem erlaubt es dem Betreiber der Anlage, eine Einschätzung zu treffen, wie lange die Vorlaufzeit bis zur Durchführung der Wartungsarbeiten sein sollte, um innerhalb eines vorgegebenen Kostenrahmens für die anfallenden Wartungs- und Verschlechterungskosten zu bleiben.

Alternativ oder ergänzend kann ebenfalls auch vorgesehen sein, dass das Verfahren weiterhin den Schritt des Berechnens des Betrages der Zeitdifferenz zwischen dem zweiten Zeitwert des ersten Zeitfensters und dem zweiten Zeitwert des zweiten Zeitfensters als Warnzeitintervall umfasst. Erreicht ein Betrieb der technischen Anlage zeitlich den Verlauf eines Warnzeitintervalls ohne Wartungsarbeiten durchgeführt zu haben, wird dem Betreiber signalisiert, dass unmittelbarer Handlungsbedarf besteht, um den vorgegebenen Kostenrahmen für die Gesamtkosten aus Wartungskosten und Verschlechterungskosten nicht zu überschreiten. Insofern dient das Warnzeitintervall der Signalisierung unmittelbarer Handlungsdurchführungen.

Gemäß einer ersten und besonders bevorzugten Ausführungsform der erfindungsgemäßen Berechnungseinheit zur Bestimmung des Betriebszeitbereichs ist vorgesehen, dass die Berechnungseinheit eine Eingabeeinheit aufweist, über welche durch einen Benutzer Vorgabewerte zur Berechnung des zeitlichen Verlaufs zu den Kosten der Wartungsarbeiten und/oder zur Berechnung des zeitlichen Verlaufs zu den Verschlechterungskosten und/oder zur ersten Toleranzgrenze und/oder zweiten Toleranzgrenze eingegeben werden können. Die Vorgabewerte entsprechen hierbei insbesondere den Werten des zeitlichen Verlaufs zu den Kosten der Wartungsarbeiten bzw. den Werten des zeitlichen Verlaufs zu den Verschlechterungskosten. Damit ist es dem Betreiber ermöglicht, der Berechnungseinheit geeignete Vorgabewerte zu übergeben, um einen nach einem Modell vorhergesagten zeitlichen Verlauf zu den Kosten der Wartungsarbeiten bzw. dem zeitlichen Verlauf zu den Verschlechterungskosten vorzugeben. Die Eingabeeinheit ermöglicht also eine Flexibilisierung der mit der Berechnungseinheit ausgeführten Bestimmung des Betriebszeitbereichs im Sinne eines ersten Zeitfensters.

Speziell können über die Eingabeeinheit eingegebene Vorgabewerte, insbesondere die Werte der Kosten der Wartungsarbeiten und/oder Werte der Verschlechterungskosten sein. Nach Eingabe dieser Werte und bei Annahme eines vorhergesagten Verlaufs zu den Kosten der Wartungsarbeiten bzw. zu den Verschlechterungskosten kann die Berechnungseinheit geeignete Vorhersagen treffen hinsichtlich der zeitlichen Lage des Minimums der Funktion der Summe von zeitlichem Verlauf zu den Kosten der Wartungsarbeiten und zeitlichem Verlauf zu den Verschlechterungskosten bzw. zu dem daraus abgeleiteten ersten Zeitfenster.

Gemäß einer weiteren besonders bevorzugten Ausführungsform der erfindungsgemäßen Berechnungseinheit ist vorgesehen, dass die Berechnungseinheit eine Messeinheit aufweist, über welche Messwerte zur Berechnung des zeitlichen Verlaufs zu den Verschlechterungskosten ermittelt werden können. Insbesondere sind dies physikalische Messparameter, die über geeignete Sonden in der technischen Anlage zeitlich ermittelt werden, um etwa den Grad des Verschleißes der technischen Anlage bzw. den Grad der Verschmutzung der technischen Anlage zu erfassen. Diese Messwerte werden der Berechnungseinheit zugeführt, damit diese eine geeignete und vorteilhafte Berechnung des ersten bzw. zweiten Zeitfensters vornehmen kann. Die erfassten Messwerte bestimmen insbesondere hierbei den durch die Berechnungseinheit bestimmten Verlauf zu den Verschlechterungskosten, da diese in erster Linie durch Verschleiß und Verschmutzung verursacht sind.

Gemäß eines weiteren Aspekts der erfindungsgemäßen Berechnungseinheit ist vorgesehen, dass die über die Messeinheit ermittelten Messwerte insbesondere Parameter sind, welche mit dem Grad eines Verschleißes oder der Verschmutzung der technischen Anlage bzw. funktioneller Bauteile darin korrespondieren. Die Messeinheit ermöglicht somit eine anlagenspezifische Anpassung des zeitlichen Verlaufs zu den Verschlechterungskosten und gibt dem Betreiber damit anlagenspezifische Informationen, auf deren Grundlage dieser die Länge der Wartungsintervalle bzw. die Länge des ersten Zeitfensters bemessen kann.

Entsprechend einer weiteren alternativen oder auch ergänzenden Ausführungsform ist vorgesehen, dass die Berechnung des zeitlichen Verlaufs zu den Verschlechterungskosten mittels Vorgabewerten aus der Eingabeeinheit und Messwerten aus der Messeinheit erfolgt. Durch Berücksichtigung von Vorgabewerten aus beiden Einheiten kann folglich eine möglichst realistische und zeitgenaue Darstellung des zeitlichen Verlaufs zu den Verschlechterungskosten bestimmt werden. Dies wiederum versetzt den Betreiber in die Lage, hinsichtlich der Kosteneffizienz der durchzuführenden Wartungs- und Instandsetzungsarbeiten sehr vorteilhafte Entscheidungen zu treffen.

Nachfolgend soll die Erfindung anhand der in den Figuren dargestellten Ausführungsformen bzw. der einzelnen Aspekte der dargestellten Ausführungsformen erklärt werden. Hierbei ist darauf hinzuweisen, dass die Figuren mitunter lediglich schematisch dargestellt sind, was jedoch nicht die Ausführbarkeit der konkreten Ausführungsformen einschränkt. Ausführungsgemäß werden zudem in den Figuren dargestellte einzelne funktionelle Merkmale für sich alleine sowie in Zusammensicht mit anderen funktionellen Merkmalen in beliebiger Kombination beansprucht.

Hierbei zeigen:

Figur 1 eine graphische Darstellung des zeitlichen Verlaufs zu den Kosten der Wartungsarbeiten sowie des zeitlichen Verlaufs zu den Verschlechterungskosten zur Ermittlung des Minimums der zeitlichen Funktion der Summe beider zeitlicher Verläufe und zur Ermittlung des ersten Zeitfensters;

Figur 2 eine schematische Darstellung einer ersten Ausführungsform der erfindungsgemäßen Berechnungseinheit;

Figur 3 eine Ausführungsform einer graphischen Darstellung des erfindungsgemäß ermittelten ersten Zeitfensters bzw. ausführungsgemäß ermittelten zweiten Zeitfensters im Vergleich zum aktuellen Betriebszeitpunkt;

Figur 4 eine erste Ausführungsform des erfindungsgemäßen Verfahrens zur Bestimmung eines Betriebszeitbereichs im Sinne eines ersten Zeitfensters in flussdiagrammatischer Darstellung;

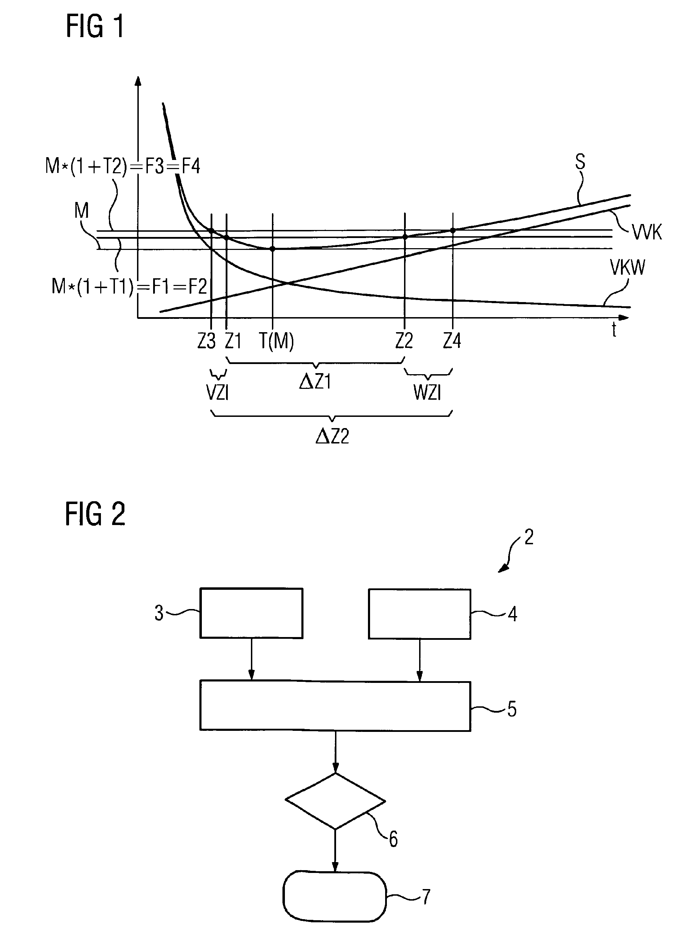

Figur 1 zeigt den zeitlichen Verlauf VKW zu den Kosten der Wartungsarbeiten, der mit zunehmendem zeitlichem Verlauf über die Zeit t (im Nachfolgenden auch als T bezeichnet) sinkt. Demgegenüber steigt der ebenfalls dargestellte zeitliche Verlauf VVK zu den Verschlechterungskosten. Werden beide zeitlichen Verläufe VKW und VVK zur Darstellung des zeitlichen Verlaufs zu den Gesamtkosten summiert, ergibt sich die zeitliche Funktion der Summe S. Dieser zeitliche Verlauf der Funktion der Summe S weist ein Minimum M auf. Das Minimum M korrespondiert mit einem zeitlichen Wert T(M), welcher dem rechnerisch optimalen Zeitpunkt für die Durchführung der Wartungs- und Instandsetzungsarbeiten entspricht. Dieser Wert ist auch identisch mit einer rechnerisch optimalen Länge des Wartungsintervalls.

Um nun das erste Zeitfenster $\Delta Z1$ zu bestimmen, wird der Wert des Minimums M mit dem Faktor (1+erste Toleranzgrenze T1) multipliziert. Die sich daraus ergebenden zwei Funktionswerte F1 und F2 liegen betragsgemäß entsprechend über dem Wert des Minimums M. Aufgrund des Verlaufs der Funktion der Summe S vom zeitlichen Verlauf VKW zu den Kosten der Wartungsarbeiten und zeitlichem Verlauf VVK zu den Verschlechterungskosten lassen sich zu den beiden Funktionswerten F1 und F2 entsprechend zwei jeweils zugehörige Zeitwerte Z1 (dem Funktionswert F1 zugeordnet) sowie Z2 (dem Funktionswert F2 zugeordnet) bestimmen. Der Abstand beider Zeitwerte Z1 und Z2 definiert das Zeitfenster $\Delta Z1$ innerhalb welchem der Betreiber einer technischen Anlage Wartungsarbeiten und die damit in Verbindung stehenden Instandsetzungsarbeiten unter Wahrung eines durch die erste Toleranzgrenze T1 vorgegebenen Kostenrahmens auszuführen kann.

Ebenfalls ist in Figur 1 die Ermittlung eines zweiten Zeitfensters $\Delta Z2$ dargestellt, welches sich ebenso wie die Ermittlung des ersten Zeitfensters $\Delta Z1$ durch Multiplikation des Minimums M mit einem zweiten Faktor (1+zweite Toleranzgrenze T2) ergibt. Dieses Produkt aus Minimum M und (1+zweite Toleranzgrenze T2) erlaubt aufgrund des erst fallenden und dann steigenden Verlaufs der Funktion der Summe S vom zeitlichen Verlauf VKW zu den Kosten der Wartungsarbeiten und zeitlichem Verlauf VVK zu den Verschlechterungskosten die Bestimmung von zwei weiteren Funktionswerten F3 und F4. Diesen beiden Funktionswerte F3 und F4 ist jeweils ein zugehöriger Zeitwert zugeordnet. Der Zeitwert Z3 ist dem Funktionswert F3 zugeordnet und der Zeitwert Z4 dem Funktionswert F4. Wird die zweite Toleranzgrenze T2, wie vorliegend der Fall, größer gewählt als die erste Toleranzgrenze T1, ist das zweite Zeitfenster $\Delta Z2$ größer als das erste Zeitfenster $\Delta Z1$ und umschließt dieses vollständig.

Dementsprechend kann zwischen dem zeitlichen Beginn Z3 des zweiten Zeitfensters $\Delta Z2$ und dem zeitlichen Beginn Z1 des ersten Zeitfensters $\Delta Z1$ ein Vorbereitungszeitintervall VZI definiert werden, welches den Betreiber einer Anlage auf die bevorstehenden Wartungsarbeiten hinweisen kann.

Gleichzeitig vermag zwischen dem zweiten Zeitwert Z2 des ersten Zeitfensters $\Delta Z1$ und dem zweiten Zeitwert Z4 des zweiten Zeitfensters $\Delta Z2$ ein Warnzeitintervall WZI definiert werden, welches den Betreiber einer Anlage bei Erreichen der Betriebszeit warnt, dass der für die Erreichung der geplanten Gesamtkosten, die durch die Wartungskosten und Verschlechterungskosten bestimmt sind, bereits der geeignete Betriebszeitbereich überschritten ist. Demgemäß wird dem Betreiber signalisiert, dass unmittelbarer Handlungsbedarf besteht.

Ausführungsgemäß nach Fig.1 entspricht der zeitliche Verlauf VKW zu den Kosten der Wartungsarbeiten KW dem zeitlichen Verlauf der zeitlich spezifischen Kosten der Wartungsarbeiten SKW. Ebenfalls entspricht der zeitliche Verlauf VVK zu den Verschlechterungskosten VK dem zeitlichen Verlauf der zeitlich spezifischen Verschlechterungskosten SVK. Die sich daraus ergebende Summe S (Summenverlauf) beider Verläufe VKW und VVK stellt sich ausführungsgemäß somit folgendermaßen dar:

$$S = VKW + VVK = \frac{WK}{T} + \frac{VK}{T} = SWK + SVK \ . \qquad \text{(Gleichung 1)}$$

Die Werte der Funktion der Summe S, welche den zeitlichen Verlauf der spezifischen Gesamtkosten darstellen, sind insofern von dem Verlauf der spezifischen Kosten der Wartungsarbeiten SKW abhängig. Diese sind umso niedriger, je später die Wartungsarbeiten durchgeführt werden. Demgegenüber steigen die spezifischen Verschlechterungskosten SVK typischerweise mit der Zeit an.

Wird beispielsweise für die Verschlechterungskosten VK ein Zusammenhang gemäß der nachfolgenden Gleichung 2 angenommen

$$VK = \int_0^T C(t)\,dt \qquad \text{(Gleichung 2)},$$

ergibt sich im Falle eines linearen Anstiegs der in Gleichung 2 eingesetzten Kostenrate $C(t) = \alpha t$ für den Verlauf der spezifischen Verschlechterungskosten SVK ein linearer Verlauf, wie in Gleichung 2 dargestellt:

$$SVK = \frac{1}{T}\int_0^T C(t)\,dt = \frac{1}{T}\int_0^T \alpha t\,dt = \frac{\alpha}{2}T \qquad \text{(Gleichung 3)}$$

Nimmt man zudem an, dass die Kosten der Wartungsarbeiten KW im Wesentlichen konstant sind, so ergibt sich für den zeitlichen Verlauf der spezifischen Kosten der Wartungsarbeiten SKW ein hyperbolischer Verlauf gemäß Gleichung 3:

$$SWK = \frac{WK}{T} = \frac{\beta}{T} \qquad \text{(Gleichung 4)}$$

Hierbei entspricht $\beta$ den Kosten der Wartungsarbeiten.

Der zeitliche Verlauf der spezifischen Gesamtkosten, also die Funktion der Summe S vom zeitlichen Verlauf VKW zu den Kosten der Wartungsarbeiten und zeitlichem Verlauf VVK zu den Verschlechterungskosten, in Abhängigkeit vom Zeitpunkt T einer auszuführenden Wartungs- und damit verbundenen Instandsetzungsarbeit lässt sich also gemäß Gleichung 5 wie folgt beschreiben:

$$S = \frac{\alpha}{2}T + \frac{\beta}{T} \quad \text{(Gleichung 5)}$$

Das Minimum M der spezifischen Gesamtkosten S liefert die Nullstelle der Ableitung der Funktion gemäß Gleichung 5. Der zugehörige Zeitwert T(M) entspricht hierbei in dem Modell dem rechnerisch optimalem Zeitpunkt für Wartungsarbeiten und den damit verbundenen Instandsetzungsarbeiten. Er beträgt

$$\sqrt{\frac{2\beta}{\alpha}} \ .$$

Der Wert des Minimums M beträgt

$$\sqrt{2\ \alpha\ \beta}\ .$$

Entsprechend des erfindungsgemäßen Verfahrens ergeben sich nun die zwei Zeitwerte Z1 und Z2 des ersten Zeitfensters $\Delta Z1$ durch Multiplikation des dem Minimum M zugeordneten Wertes mit dem Faktor (1+erste Toleranzgrenze T1). Beispielsweise beträgt dieser Faktor 1,03, d.h. die erste Toleranzgrenze T1 wird mit 3 % angenommen. Dies wiederum bedeutet, dass eine Erhöhung der erwarteten spezifischen Gesamtkosten um 3 % nicht überschritten wird, sollten die Wartungsarbeiten in dem zugehörigen ersten Zeitfenster $\Delta Z1$ ausgeführt werden. Alternativ oder auch zusätzlich kann eine zweite Toleranzgrenze T2 angenommen werden, welche die Berechnung eines hinsichtlich der Größe im Vergleich zum ersten Zeitfenster $\Delta Z1$ unterschiedlichen zweiten Zeitfensters $\Delta Z2$ erlaubt. Wird bspw. die zweite Toleranzgrenze als 5 % angenommen, vergrößert sich das zweite Zeitfenster $\Delta Z2$ entsprechend.

Figur 2 zeigt eine schematische Darstellung einer Berechnungseinheit 2 zur Bestimmung eines Betriebsbereichs im Sinne eines ersten Zeitfensters $\Delta Z1$ zur wirtschaftlichen Ausführung von Wartungsarbeiten an einer technischen Anlage 1 (vorliegend nicht gezeigt). Die Berechnungseinheit 2 weist eine Eingabeeinheit 3 auf, über welche durch einen Benutzer Vorgabewerte zur Berechnung des zeitlichen Verlaufs VKW zu den Kosten der Wartungsarbeiten und/oder zur Berechnung des zeitlichen Verlaufs VVK zu den Verschlechterungskosten und/oder zur ersten Toleranzgrenze und/oder zweiten Toleranzgrenze T2 eingegeben werden können. Gleichzeitig weist die Berechnungseinheit 2 eine Messeinheit 4 auf, über welche Messwerte zur Berechnung des zeitlichen Verlauf VVK zu den Verschlechterungskosten ermittelt werden können. Typischerweise erfasst die Messeinheit 4 physikalische Parameter, die geeignet sind, den Grad der Verschleißung oder Verschmutzung der technischen Anlage bzw. davon umfasster funktioneller Bauteile zu beschreiben. Die Eingabeeinheit 3 sowie die Messeinheit 4 übergeben beide entsprechende Vorgabewerte bzw. Werte an eine Kalkulationseinheit 5, die den zeitlichen Verlauf VKW zu den Kosten der Wartungsarbeiten KW und den zeitlichen Verlauf VVK zu den Verschlechterungskosten VK berechnet. Gleichzeitig ermittelt die Kalkulationseinheit 5 den Wert des Minimums M der zeitlichen Funktion der Summe S vom zeitlichen Verlauf VKW zu den Kosten der Wartungsarbeiten und zeitlichem Verlauf VVK zu den Verschlechterungskosten. Ebenso ermittelt die Kalkulationseinheit 5 den zugehörigen Zeitwert T(M).

Die Informationen zum zeitlichen Verlauf VKW zu den Kosten der Wartungsarbeiten, wie auch zum zeitlichen Verlauf VVK zu den Verschlechterungskosten werden zusammen mit den Informationen zum Minimum M, wie auch der ersten Toleranzgrenze T1 bzw. zweiten Toleranzgrenze T2 an eine Zeitberechnungseinheit 6 übertragen, die gemäß den obigen Erklärungen die Berechnung des ersten Zeitfensters $\Delta Z1$ bzw. der zweiten Zeitfensters $\Delta Z2$ übernimmt. Die Informationen können optional an eine Ausgabeeinheit 7 übertragen werden, mittels derer die Informationen graphisch dargestellt werden, die etwa dem Betreiber einer technischen Anlage leicht zugänglich werden zu lassen.

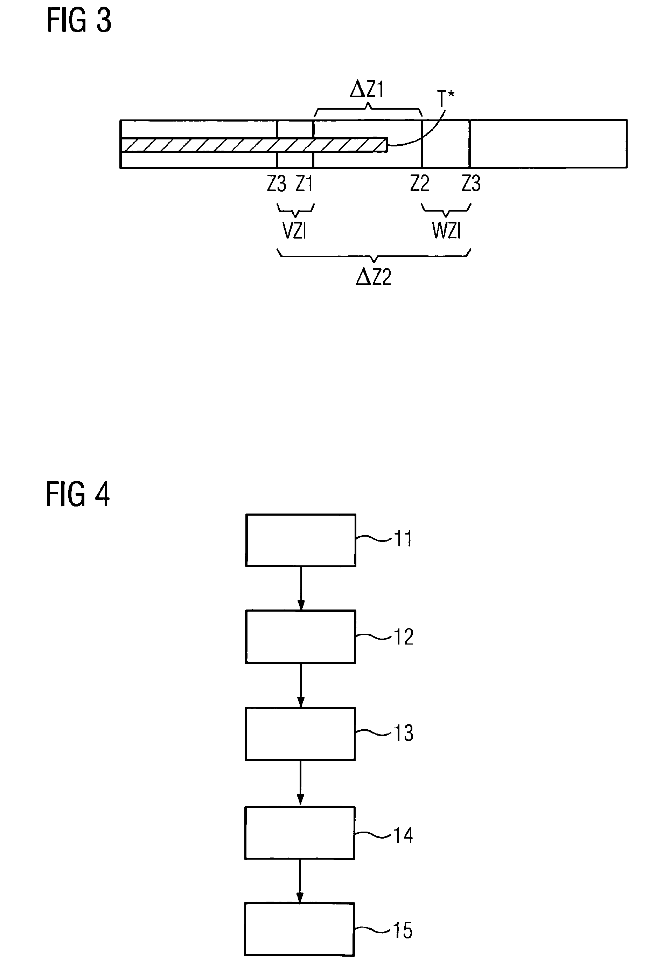

Eine solche graphische Darstellung findet sich etwa in Fig. 3. Dort wird entsprechend einer sequenziellen Blockdarstellung der zeitliche Verlauf vom ersten Zeitfenster $\Delta Z1$ und zweitem Zeitfenster $\Delta Z2$ im Vergleich zum aktuell herrschenden Betriebszeitpunkt T, graphisch dargestellt. Hierbei entspricht der aktuelle Betriebszeitpunkt T* dem in der Figur dargestellten rechten Ende des schraffierten Blocks (der Zeitfortschritt verläuft von links nach rechts). Die einfache graphische Darstellung erlaubt dem Betreiber sofort zu erkennen, ob der aktuelle Betriebszeitpunkt T* sich bereits in dem ersten Zeitfenster $\Delta Z1$ befindet. Entsprechend der Position ist es dem Betreiber ermöglicht, entsprechende Handlungen vorzunehmen.

Ausführungsgemäß ist es ebenfalls auch möglich, dass die Messeinheit 4 von der Anlagenleittechnik mit umfasst ist, bzw. in diese integriert ist. Ebenfalls ist es denkbar, dass die Kalkulationseinheit 5 in einzelne Untereinheiten aufgeteilt ist, in welchen spezifische Kalkulationen ausgeführt werden. Ebenso ist es ausführungsgemäß auch möglich, die Kalkulationseinheit 5 und die Zeitberechnungseinheit 6 in einer Einheit zusammenzufassen.

Figur 4 zeigt eine erste Ausführungsform des erfindungsgemäßen Verfahrens zur Bestimmung eines Betriebszeitbereichs im Sinne eines ersten Zeitfensters $\Delta Z1$ zur kosteneffizienten Ausführung von Wartungsarbeiten an einer technischen Anlage, insbesondere einer Kraftwerksanlage, bzw. davon umfasster Bauteile, wobei die einzelnen Schritte flussdiagrammatisch aufeinander folgend dargestellt sind. Jeweils ist darauf hinzuweisen, dass die ersten drei Schritte 11, 12 und 13 in beliebiger Reihenfolge zueinander vorgenommen werden können. Die daran anschließenden Schritte 14 und 15 sind in der in Figur 4 dargestellten zeitlichen Abfolge zueinander vorzunehmen.

Gemäß eines ersten Schrittes 11 werden Werte eines zeitlichen Verlaufs VWK zu den Kosten der Wartungsarbeiten vorgegeben; gemäß eines zweiten Schrittes 12 werden Werte eines zeitlichen Verlaufs VVK zu den Verschlechterungskosten vorgegeben; gemäß eines dritten Schrittes 13 wird eine erste Toleranzgrenze T1 vorgegeben; gemäß eines vierten Schrittes 14 wird ein Minimum M der zeitlichen Funktion der Summe S vom zeitlichen Verlauf VKW zu den Kosten der Wartungsarbeiten und zeitlichem Verlauf VVK zu den Verschlechterungskosten ermittelt; gemäß Schritt 15 werden zwei Zeitwerte ermittelt zur Definition eines ersten Zeitfensters ΔZ1, wobei die beiden Zeitwerte Z1 und Z2 aus der zeitlichen Funktion der Summe vom zeitlichen Verlauf VKW zu den Kosten der Wartungsarbeiten und zeitlichem Verlauf VVK zu den Verschlechterungskosten berechnet werden und jeweils den Funktionswerten F1 und F2 zugeordnet sind, deren Werte den Wert des Minimums M multipliziert mit (1+erste Toleranzgrenze T1) entsprechen.

Abschließend ist darauf hinzuweisen, dass vorab einzelne Bezugszeichen sowohl im Sinne eines Bezugszeichens als auch im Sinne einer mathematischen Funktion oder Variable verwendet werden. Hierbei stellt sich jedoch je nach dem konkreten Zusammenhang dar, welche Bedeutung das Bezugszeichen erfüllt. In jedem Fall ergibt sich daraus keine Einschränkung hinsichtlich der logischen Zusammenhänge der Erfindung.

Weitere Ausführungsformen ergeben sich aus den Unteransprüchen.

**Patentansprüche**

1.   Verfahren zur Bestimmung eines Betriebszeitbereichs im Sinne eines ersten Zeitfensters (ΔZ1) zur kosteneffizienten Ausführung von Wartungsarbeiten an einer technischen Anlage (1), insbesondere einer Kraftwerksanlage, bzw. davon umfasster Bauteile welches folgende Schritte umfasst:

   - Vorgeben von Werten (WW) eines zeitlichen Verlaufs (VKW) zu den Kosten (KW) der Wartungsarbeiten (KW);
   - Vorgeben von Werten (WI) eines zeitlichen Verlaufs (VVK) zu den Verschlechterungskosten (VK);
   - Vorgabe einer ersten Toleranzgrenze (T1);
   - Ermittlung eines Minimums (M) der zeitlichen Funktion der Summe (S) von zeitlichem Verlauf (VKW) zu den Kosten der Wartungsarbeiten (KW) und zeitlichem Verlauf (VVK) zu den Verschlechterungskosten (VK);
   - Ermittlung zweier Zeitwerte (Z1, Z2) zur Definition eines ersten Zeitfensters (ΔZ1), wobei die zwei Zeitwerte (Z1, Z2) aus der zeitlichen Funktion der Summe (S) von zeitlichem Verlauf (VKW) zu den Kosten der Wartungsarbeiten (KW) und zeitlichem Verlauf (VVK) zu den Verschlechterungskosten (VK) berechnet werden und jeweils den Funktionswerten (F1, F2) zugeordnet sind, deren Werte dem Wert des Minimums (M) multipliziert mit (1+erste Toleranzgrenze (T1)) entsprechen.

2.   Verfahren gemäß Anspruch 1,
   **dadurch gekennzeichnet, dass** die Werte des zeitlichen Verlaufs (VKW) zu den Kosten der Wartungsarbeiten (KW) Werten eines zeitlichen Verlaufs der spezifischen Kosten der Wartungsarbeiten (SKW) entsprechen.

3.   Verfahren gemäß Anspruch 1 oder 2,
   **dadurch gekennzeichnet, dass** die Werte des zeitlichen Verlaufs (VKW) zu den Kosten der Wartungsarbeiten (KW) Werten eines zeitlichen Verlaufs der Kosten (KW) der Wartungsarbeiten pro Zeitpunkt (T) der Ausführung der Wartungsarbeiten entsprechen.

4.   Verfahren gemäß einem der Ansprüche 1 bis 3,
   **dadurch gekennzeichnet, dass** die Werte des zeitlichen Verlaufs (VVK) zu den Verschlechterungskosten (VK) Werten eines zeitlichen Verlaufs der spezifischen Verschlechterungskosten (SVK) entsprechen.

5.   Verfahren gemäß einem der Ansprüche 1 bis 4,
   **dadurch gekennzeichnet, dass** die Werte des zeitlichen Verlaufs (VVK) zu den Verschlechterungskosten (VK) Werten eines zeitlichen Verlaufs der Verschlechterungskosten (VK) pro Zeitpunkt (T) der Ausführung der Wartungsarbeiten entsprechen.

6.   Verfahren gemäß einem der Ansprüche 1 bis 5,
   **dadurch gekennzeichnet, dass** die erste Toleranzgrenze (T1) nicht mehr als 50%, bevorzugt nicht mehr als 10% und ganz besonders bevorzugt nicht mehr als 5% beträgt.

7.   Verfahren gemäß einem der Ansprüche 1 bis 6,
   **dadurch gekennzeichnet, dass** das Verfahren die weiteren Schritte aufweist:

   - Vorgabe einer zweiten Toleranzgrenze (T2);
   - Ermittlung zweier weiterer Zeitwerte (Z3, Z4) zur Definition eines zweiten Zeitfensters (ΔZ2), wobei die zwei Zeitwerte (Z3, Z4) aus der zeitlichen Funktion der Summe (S) von zeitlichem Verlauf (VKW) zu den Kosten der Wartungsarbeiten (KW) und zeitlichem Verlauf (VVK) zu den Verschlechterungskosten (VK) berechnet werden und jeweils den Funktionswerten (F3, F4) zugeordnet sind, deren Werte dem Wert des Minimums (M) multipliziert mit (1+zweite Toleranzgrenze (T2)) entsprechen.

8. Verfahren gemäß Anspruch 7,
   **dadurch gekennzeichnet, dass** das Verfahren weiterhin den Schritt des Berechnens des Betrags der Zeitdifferenz zwischen dem ersten Zeitwert (Z1) des ersten Zeitfensters (ΔZ1) und dem ersten Zeitwert (Z3) des zweiten Zeitfensters (ΔZ2) als Vorbereitungszeitintervall (VZI) umfasst.

9. Verfahren gemäß einem der Ansprüche 7 oder 8,
   **dadurch gekennzeichnet, dass** das Verfahren weiterhin den Schritt des Berechnens des Betrags der Zeitdifferenz zwischen dem zweiten Zeitwert (Z2) des ersten Zeitfensters (ΔZ1) und dem zweiten Zeitwert (Z4) des zweiten Zeitfensters (ΔZ2) als Warnzeitintervall (WZI) umfasst.

10. Berechnungseinheit (2) zur Bestimmung eines Betriebszeitbereichs im Sinne eines ersten Zeitfensters (ΔZ1) zur kosteneffizienten Ausführung von Wartungsarbeiten an einer technischen Anlage (1), insbesondere einer Kraftwerksanlage, bzw. davon umfasster Bauteile gemäß einem Verfahren der Ansprüche 1 bis 9.

11. Berechnungseinheit gemäß Anspruch 10,
    **dadurch gekennzeichnet, dass** die Berechnungseinheit (2) eine Eingabeeinheit (3) aufweist, über welche durch einen Benutzer Vorgabewerte zur Berechnung des zeitlichen Verlaufs (VKW) zu den Kosten der Wartungsarbeiten (KW) und/oder zur Berechnung des zeitlichen Verlaufs (VVK) zu den Verschlechterungskosten (VK) und/oder zur ersten Toleranzgrenze (T1) und/oder zweiten Toleranzgrenze (T2) eingegeben werden können.

12. Berechnungseinheit gemäß Anspruch 11,
    **dadurch gekennzeichnet, dass** die über die Eingabeeinheit (3) eingegebenen Vorgabewerte insbesondere die Werte der Kosten (KW) der Wartungsarbeiten und/oder Werte der Verschlechterungskosten (VK) sind.

13. Berechnungseinheit gemäß einem der Ansprüche 10 bis 12,
    **dadurch gekennzeichnet, dass** die Berechnungseinheit (2) eine Messeinheit (4) aufweist, über welche Messwerte zur Berechnung des zeitlichen Verlaufs (VVK) zu den Verschlechterungskosten (VK) ermittelt werden können.

14. Berechnungseinheit gemäß Anspruch 13,
    **dadurch gekennezeichnet, dass** die über die Messeinheit (4) ermittelten Messwerte insbesondere Parameter (P) sind, welche mit dem Grad eines Verschleißes oder der Verschmutzung der technischen Anlage (1) bzw. funktioneller Bauteile darin korrespondieren.

15. Berechnungseinheit gemäß einem der Ansprüche 13 oder 14,
    **dadurch gekennzeichnet, dass** die Berechnung des zeitlichen Verlaufs (VVK) zu den Verschlechterungskosten (VK) mittels Vorgabewerten aus der Eingabeeinheit (3) und Messwerte aus der Messeinheit (4) erfolgt.

## FIG 1

$M*(1+T2)=F3=F4$

$M$

$M*(1+T1)=F1=F2$

S

VVK

VKW

t

Z3  Z1  T(M)  Z2  Z4

VZI  $\Delta Z1$  WZI

$\Delta Z2$

## FIG 2

2

3

4

5

6

7

## FIG 3

$$\Delta Z1 \qquad T^*$$

Z3  Z1          Z2    Z3

VZI              WZI

$$\Delta Z2$$

## FIG 4

11

12

13

14

15

Europäisches
Patentamt

European
Patent Office

Office européen
des brevets

## EUROPÄISCHER RECHERCHENBERICHT

**Nummer der Anmeldung**

EP 12 19 4235

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, Bd. 30, Nr. 11, 1. November 2007 (2007-11-01), Seiten 592-593, XP007905525, ISSN: 0170-9291 * Der gemäß Artikel 92 EPÜ unter angemessener Berücksichtigung der Beschreibung und der Zeichnungen betrachtete Anspruchsgegenstand bezieht sich auf Verfahren aus der Liste von Gegenständen und Tätigkeiten, die nach Artikel 52 (2) und (3) EPÜ von der Patentierbarkeit ausgeschlossen sind. Die Informationstechnologie, die als Vehikel zur Ausführung der genannten Verfahren eingesetzt wird, ist konventioneller Art. Ihre Verwendung zur Ausführung nichttechnischer Verfahren gehört zum allgemeinen Fachwissen, und sie war am Anmeldetag der vorliegenden Anmeldung jedermann ohne Weiteres zugänglich. Die Angabe von Unterlagen erübrigt sich somit. * ----- | 1-15 | INV. G06Q10/06 |
| | | | RECHERCHIERTE SACHGEBIETE (IPC) |
| | | | G06Q |

Der vorliegende Recherchenbericht wurde für alle Patentansprüche erstellt

| Recherchenort | Abschlußdatum der Recherche | Prüfer |
|---|---|---|
| Den Haag | 17. April 2013 | Bohner, Michael |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

......................................................................................

& : Mitglied der gleichen Patentfamilie, übereinstimmendes
    Dokument

EPO FORM 1503 03.82 (P04C03)